# EUROPEAN PATENT APPLICATION

(11) **EP 4 831 642 A1**
(43) Date of publication of application: **28.10.2026**
(21) Application number: 24906840.4
(22) Date of filing: 13.09.2024
(51) Int. Cl.: G01N 35/04, B65G 54/02, H02P 7/02

(54) **SPECIMEN TRANSPORT DEVICE, SPECIMEN ANALYSIS SYSTEM, AND SPECIMEN PRETREATMENT DEVICE**

(30) Priority: 19.12.2023 JP 2023214028
(71) Applicant: Hitachi High-Tech Corporation, Minato-ku Tokyo 105-6409 (JP)
(72) Inventor: AOYAMA Yasuaki, Tokyo 100-8280 (JP); HOSHI Ryosuke, Tokyo 100-8280 (JP); KANEKO Satoru, Tokyo 100-8280 (JP)
(74) Representative: MERH-IP Matias Erny Reichl Hoffmann Patentanwälte PartG mbB
(86) International application number: PCT/JP2024/032941
(87) International publication number: WO 2025/134450

(57) **Abstract**

The invention provides a conveyance device capable of stably conveying a conveyed object. The sample conveyance device (1) according to the invention includes a plurality of electromagnets each including a tooth (20) made of a magnetic material and a coil (30) wound around the tooth (20), and a conveyed object including a permanent magnet (10) and disposed above the electromagnets. The conveyed object is a container carrier that holds a sample container containing a sample which is a biological sample, and is conveyed in at least a part of a conveyance line to an analysis unit. The analysis unit analyzes a component contained in the biological sample for the biological sample reacted with a reagent. The coil (30) includes a lower coil (30a) located at a position closest to the conveyed object and a propulsion coil (30b) that is located in front of the conveyed object in a traveling direction and generates thrust toward the conveyed object. When the conveyed object is conveyed, the lower coil (30a) is excited and then the propulsion coil (30b) is excited to propel the conveyed object.

## Description

### Technical Field

The present invention relates to a sample conveyance device that conveys a sample which is a biological sample, a sample analysis system that analyzes the sample, and a sample preprocessing device that preprocesses the sample.

### Background Art

In a sample analysis system for a clinical test, tests of designated analysis items are performed on biological samples (samples) such as blood, plasma, serum, urine, and other body fluids. In such a sample analysis system, a plurality of types of devices are connected, and each step can be automatically processed. That is, in order to rationalize operations in a test room, analysis units in a plurality of fields such as biochemistry and immunity and preprocessing units that perform preprocessing necessary for analysis are connected by a conveyance device (conveyance line), and these units are operated as one system.

In a sample analysis system in the related art, a conveyance device conveys a sample mainly by a belt driving method. In the belt driving method, when an abnormality occurs in a belt and the conveyance of a sample is stopped, the sample cannot be supplied to each device, and the analysis of the sample is interrupted. Therefore, in a conveyance device using the belt driving method, it is necessary to be very careful of an abnormality (for example, wearing) of a belt. Therefore, a method of conveying a sample using an electromagnetic attraction force as thrust has attracted attention.

With the advancement of advanced medical care and aging society, the importance of sample processing is increasing. Therefore, in order to improve an analysis processing capability of a sample analysis system, there is a demand for a device capable of conveying a sample at high speed, simultaneously conveying a large amount of samples, and conveying samples in multiple directions. Examples of techniques in the related art for achieving such conveyance are disclosed in PTL 1 and PTL 2.

A laboratory sample delivery system disclosed in PTL 1 includes a container carrier that includes a magnetically active device, preferably a permanent magnet, and that conveys a sample container, a conveyance plane on which the container carrier is conveyed, and an electromagnetic actuator that is disposed to be stationary below the conveyance plane and moves the container carrier on the conveyance plane by applying a magnetic force to the container carrier, and the laboratory sample delivery system is very flexible and has high conveyance performance.

The laboratory sample delivery system disclosed in PTL 2 includes a plurality of electromagnetic actuators that move a container carrier on a conveyance plane by applying a magnetic force to the container carrier. A coil is driven with a drive current to activate one electromagnetic actuator to generate an electromagnetic flow. The electromagnetic flow is induced by a coupling element and extends in a ferromagnetic core of the electromagnetic actuator that is not activated. As a result, a magnetic pushing force is generated by the electromagnetic actuator that interacts with a permanent magnet, friction is reduced, and a pulling force generated by the activated electromagnetic actuator is overlapped in a desired direction. The plurality of electromagnetic actuators are activated in a plurality of steps, that is, at different times.

### Citation List

### Patent Literature

PTL 1: JP2017-77971A
PTL 2: JP2017-227648A

### Summary of Invention

### Technical Problem

In the techniques disclosed in PTL 1 and PTL 2, an electromagnetic actuator to be activated is switched according to a position of the container carrier including a permanent magnet, a current is applied to the electromagnetic actuator at a position to which the container carrier is to be moved, and the container carrier is stopped at a target position by an attraction force of the electromagnetic actuator with respect to the permanent magnet. In such an electromagnetic actuator, even when a current of a coil is the same, the thrust greatly changes depending on a position of a conveyed object such as the container carrier. That is, in the techniques disclosed in PTL 1 and PTL 2, there is a problem that it is difficult to control the thrust to accurately convey a conveyed object at a stable speed so as not to generate a large swing.

By feeding back a position and a speed of the conveyed object to control, it is possible to precisely control the speed and prevent speed variation. However, in particular, when a movement distance of the conveyed object is short, since a control time is short, if an initial position of the conveyed object deviates from an assumed position, it is difficult to correct a thrust difference caused by the deviation of the position. Therefore, a stop position of the conveyed object may deviate from a target position, or overshooting or undershooting from the target position may occur. Further, in a case where the conveyed object contains a liquid sample, the sample may shake due to speed variation of the conveyed object to cause foaming or liquid leakage, which may adversely affect analysis of the sample.

As described above, the conveyance device in the related art has difficulty of stably conveying a conveyed object.

An object of the invention is to provide a conveyance device capable of stably conveying a conveyed object, and a sample analysis system and a sample preprocessing device including the conveyance device.

### Solution to Problem

The sample conveyance device according to the invention includes: a plurality of electromagnets each including a tooth made of a magnetic material and a coil wound around the tooth; and a conveyed object including a permanent magnet and disposed above the electromagnets. The conveyed object is a container carrier that holds a sample container containing a sample which is a biological sample, and is conveyed in at least a part of a conveyance line to an analysis unit. The analysis unit analyzes a component contained in the biological sample for the biological sample reacted with a reagent. The coil includes a lower coil located at a position closest to the conveyed object and a propulsion coil that is located in front of the conveyed object in a traveling direction and generates thrust toward the conveyed object. When the conveyed object is conveyed, the lower coil is excited and then the propulsion coil is excited to propel the conveyed object.

The sample analysis system according to the invention includes: a loading unit in which a conveyed object is disposed, the conveyed object being a container carrier that holds a sample container containing a sample which is a biological sample; an analysis unit configured to analyze the conveyed sample; and a sample conveyance device configured to convey the conveyed object from the loading unit to the analysis unit. The analysis unit analyzes a component contained in the biological sample for the biological sample reacted with a reagent. The sample conveyance device includes a plurality of electromagnets each including a tooth made of a magnetic material and a coil wound around the tooth, and the conveyed object including a permanent magnet and disposed above the electromagnets. The coil includes a lower coil located at a position closest to the conveyed object and a propulsion coil that is located in front of the conveyed object in a traveling direction and generates thrust toward the conveyed object, and when the conveyed object is conveyed, the lower coil is excited and then the propulsion coil is excited to propel the conveyed object.

The sample preprocessing device according to the invention is connected to a sample analysis system for analyzing a sample which is a biological sample. The sample preprocessing device includes: a preprocessing unit configured to perform preprocessing on the sample conveyed to the sample analysis system; and a sample conveyance device configured to convey a conveyed object to the sample analysis system, the conveyed object being a container carrier that holds a sample container containing the sample. The sample analysis system includes an analysis unit that analyzes a component contained in the biological sample for the biological sample reacted with a reagent. The sample conveyance device includes a plurality of electromagnets each including a tooth made of a magnetic material and a coil wound around the tooth, and the conveyed object including a permanent magnet and disposed above the electromagnets. The coil includes a lower coil located at a position closest to the conveyed object and a propulsion coil that is located in front of the conveyed object in a traveling direction and generates thrust toward the conveyed object, and when the conveyed object is conveyed, the lower coil is excited and then the propulsion coil is excited to propel the conveyed object.

### Advantageous Effects of Invention

According to the invention, it is possible to provide a conveyance device capable of stably conveying a conveyed object, and it is possible to provide a sample analysis system and a sample preprocessing device including the conveyance device.

### Brief Description of Drawings

[FIG. 1] FIG. 1 is a diagram showing a schematic configuration of a conveyance device according to Embodiment 1 of the invention.
[FIG. 2] FIG. 2 is a diagram schematically showing the conveyance device cut along a ZX plane in Embodiment 1.
[FIG. 3] FIG. 3 is a diagram schematically showing a position of a permanent magnet viewed from above in Embodiment 1.
[FIG. 4] FIG. 4 is a diagram showing an example of a relationship between a position of the permanent magnet of a conveyed object and thrust acting on the conveyed object when a constant current flows through a coil at a position B in Embodiment 1.
[FIG. 5] FIG. 5 is a diagram showing an example of a pattern of a current supplied to a lower coil in Embodiment 1.
[FIG. 6] FIG. 6 is a diagram showing an example of a pattern of a current supplied to a lower coil in Embodiment 2 of the invention.
[FIG. 7] FIG. 7 is a diagram showing an example of a pattern of a current that is intermittently supplied to the lower coil and of which an energization time is gradually increased over time in Embodiment 2.
[FIG. 8] FIG. 8 is a diagram showing an example of a pattern of a current supplied to a lower coil in Embodiment 3 of the invention.
[FIG. 9] FIG. 9 is a diagram showing an example of patterns of currents supplied to a lower coil and a propulsion coil located in front of a conveyed object in a traveling direction of the conveyed object in Embodiment 4 of the invention.
[FIG. 10] FIG. 10 is a diagram showing an example of a pattern of a current supplied to the propulsion coil before a current supplied to the lower coil becomes zero in Embodiment 4.
[FIG. 11] FIG. 11 is a diagram showing an example of a pattern of a current supplied to the lower coil before a current supplied to the propulsion coil becomes zero in Embodiment 4.
[FIG. 12] FIG. 12 is a diagram schematically showing a conveyance device cut along a ZX plane in Embodiment 5 of the invention.
[FIG. 13] FIG. 13 is a diagram schematically showing an overall configuration of a sample analysis system according to an embodiment of the invention.
[FIG. 14] FIG. 14 is a diagram schematically showing an overall configuration of a sample preprocessing device according to an embodiment of the invention.

### Description of Embodiments

A sample conveyance device (hereinafter, also simply referred to as a "conveyance device") according to the invention is a device that conveys a conveyed object which is an object, and can stably convey the conveyed object. The conveyance device according to the invention can be used in, for example, a sample analysis system that uses a container carrier used for conveying a biological sample (hereinafter, referred to as a "sample") such as blood or urine as a conveyed object and performs analysis on the sample, and a sample preprocessing device that performs preprocessing necessary for analysis of a sample on the sample.

In the conveyance device according to the invention, by aligning a position of the conveyed object with a position of a coil (or tooth) that is located below the conveyed object and is closest to the conveyed object, an initial position of the movement of the conveyed object can be set to a predetermined position, thrust acting on the conveyed object can be stabilized, and the conveyed object can be stably conveyed. Therefore, in the conveyance device according to the invention, it is possible to stop the conveyed object at a target position with high accuracy, to prevent variation in a moving speed of the conveyed object, and to prevent liquid shaking and liquid scattering when the conveyed object is a liquid.

Hereinafter, a conveyance device, a sample analysis system, and a sample preprocessing device according to embodiments of the invention will be described with reference to the drawings. In the drawings used in the present specification, the same or corresponding components are denoted by the same reference numerals, and repeated description of these components may be omitted.

### [Embodiment 1]

A conveyance device according to Embodiment 1 of the invention will be described.

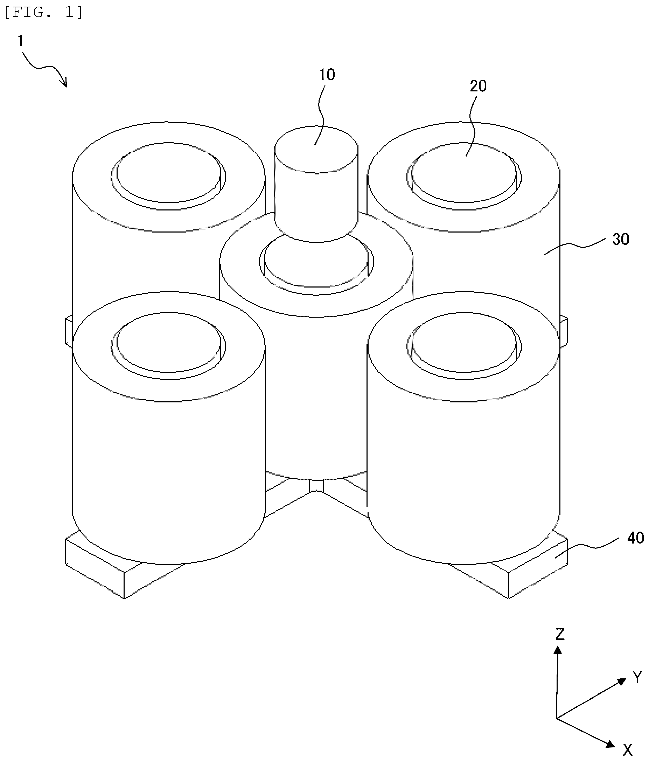

FIG. 1 is a diagram showing a schematic configuration of the conveyance device according to the embodiment. A conveyance device 1 includes a plurality of teeth 20 made of a magnetic material and a plurality of coils 30. More specifically, the conveyance device 1 includes a plurality of electromagnets each having the tooth 20 and the coil 30 wound around the tooth 20. FIG. 1 shows, as an example, the conveyance device 1 including five electromagnets.

The conveyance device 1 further includes a conveyed object, a bridge 40 (yoke), and a conveyance surface (not shown in FIG. 1). The conveyed object includes a permanent magnet 10, is disposed on the conveyance surface above the electromagnets (that is, the teeth 20 and the coils 30), and moves in a horizontal direction on the conveyance surface. The conveyed object is conveyed in at least a part of a conveyance line to an analysis unit, as will be described in Embodiment 6 to be described later. The analysis unit analyzes a component contained in a biological sample (sample) for the biological sample reacted with a reagent.

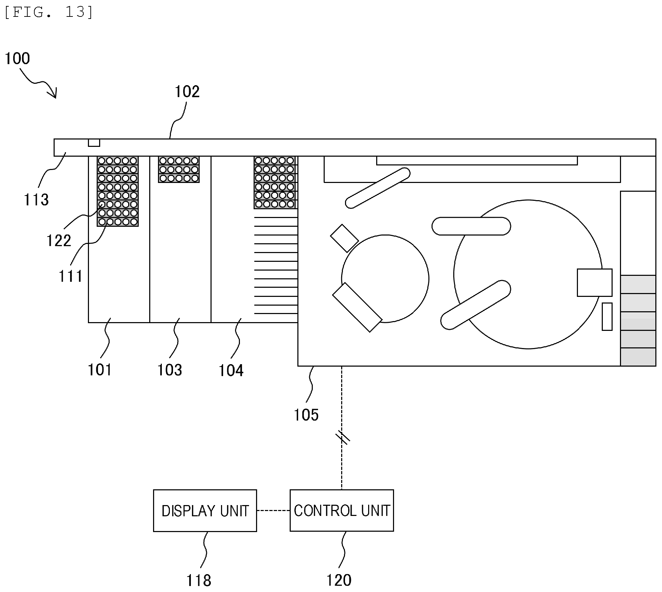

The conveyance device 1 includes a control unit (for example, a control unit 120 shown in FIG. 13), and conveys the conveyed object to a desired position according to a control signal generated by the control unit. For example, the control unit generates a control signal for exciting the coil 30, and supplies a current to the coil 30 according to the control signal to excite the coil 30.

The conveyance device 1 conveys the conveyed object by moving the permanent magnet 10 provided in the conveyed object by a magnetic pole generated by the current supplied to the coil 30. That is, the conveyance device 1 generates a magnetic pole in the tooth 20 in a direction in which the conveyed object is desired to be moved, and conveys the conveyed object by attracting the permanent magnet 10 by the magnetic pole.

The conveyed object is, for example, a container carrier. Examples of the container carrier include a sample holder that holds a sample container one by one and a sample rack that holds a plurality of sample containers. The sample container is a container containing a sample, and is, for example, a test tube or a sample cell capable of containing a liquid sample.

The conveyed object may include one or more permanent magnets 10. In the following description, the conveyed object may be represented by the permanent magnet 10.

As shown in FIG. 1, a vertical direction (up-down direction) is defined as a Z direction, and two directions orthogonal to each other in a plane (horizontal plane) perpendicular to the Z direction are defined as an X direction and a Y direction. A magnetization direction (direction of a magnetic field) of the permanent magnet 10 is the Z direction. A direction (upward direction) in which the conveyed object (permanent magnet 10) is positioned when viewed from the tooth 20 is defined as a +Z direction.

The five teeth 20 are magnetically coupled to one another by a magnetic bridge 40 at a portion opposite to a portion facing the permanent magnet 10 in the Z direction (that is, an end portion on the -Z direction side). The tooth 20, the coil 30, and the bridge 40 constitute a magnetic circuit unit.

With such a configuration, the conveyance device 1 has advantages in that the plurality of teeth 20 can be held, positions of the teeth 20 can be accurately determined, and a magnetic flux acting on the permanent magnet 10 can be increased.

In the embodiment, the five electromagnets (sets of the teeth 20 and the coils 30) are arranged in a cross shape in an XY plane. With such an arrangement of the electromagnets, the permanent magnet 10 can move in the X direction and the Y direction. Although the number of electromagnets is five in the embodiment, the conveyance device 1 may include any number of electromagnets. The plurality of electromagnets are disposed over a region where the conveyed object is desired to be conveyed. The conveyed object can be conveyed in a wide range by the plurality of electromagnets.

As shown in FIG. 1, the permanent magnet 10 of the conveyed object faces an end portion (upper end portion) on the +Z direction side of the tooth 20 in the Z direction, and moves on a conveyance surface not shown in FIG. 1.

The conveyance surface is provided on upper surface portions of the plurality of electromagnets. The conveyed object is placed on the conveyance surface so as to be movable in a horizontal direction.

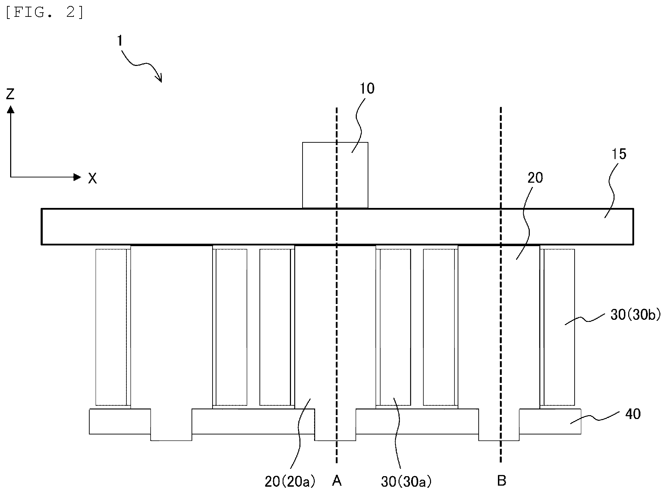

FIG. 2 is a diagram schematically showing the conveyance device 1 cut along a ZX plane. FIG. 2 shows the three teeth 20, the three coils 30, the bridge 40 that couples the three teeth 20, the permanent magnet 10 of the conveyed object, and a conveyance surface 15 on which the permanent magnet 10 moves in the conveyance device 1. The teeth 20 and the coils 30 are located below the conveyed object (permanent magnet 10).

Hereinafter, a position of any one tooth 20 is referred to as a position A, and a position of one tooth 20 adjacent to the tooth 20 at the position A is referred to as a position B. Hereinafter, when the permanent magnet 10 is located directly above the tooth 20 at the position A, the permanent magnet 10 is located at the position A, or a position of the permanent magnet 10 is the position A. The same applies to the position B.

It is assumed that a current position of the permanent magnet 10 is the position A in FIG. 2. A traveling direction of the permanent magnet 10 is the +X direction (direction from left to right in FIG. 2). That is, the conveyed object (permanent magnet 10) is moved from the position A toward the position B with the position A as an initial position of movement.

Hereinafter, among the plurality of coils 30, one coil 30 at a position closest to the conveyed object is referred to as a "lower coil 30a". The lower coil 30a is the coil 30 that is located below the conveyed object (or the permanent magnet 10) and is closest to the conveyed object. Among the plurality of teeth 20, one tooth 20 at a position closest to the conveyed object is referred to as a "lower tooth 20a". The lower tooth 20a is the tooth 20 that is located below the conveyed object (or the permanent magnet 10) and is closest to the conveyed object.

In order to move the permanent magnet 10 in the traveling direction, a current is caused to flow through the coil 30 in front of the permanent magnet 10 in the traveling direction (in FIG. 2, the coil 30 disposed around the tooth 20 at the position B), and a magnetic pole that attracts a magnetic pole of the permanent magnet 10 is generated in the tooth 20 in front of the permanent magnet 10 in the traveling direction (in FIG. 2, the tooth 20 at the position B).

Hereinafter, the coil 30 that generates an attraction force by causing a current to flow therethrough so as to move the permanent magnet 10 in the traveling direction, that is, a coil that is located in front of the permanent magnet 10 in the traveling direction and generates thrust toward the permanent magnet 10 is referred to as a "propulsion coil 30b".

The permanent magnet 10 generally moves in a manner of sliding on the conveyance surface 15. In the embodiment, the conveyance surface 15 is a flat plate-shaped surface parallel to the XY plane (horizontal plane), and is disposed at an end portion (upper end portion) on the +Z direction side of the tooth 20.

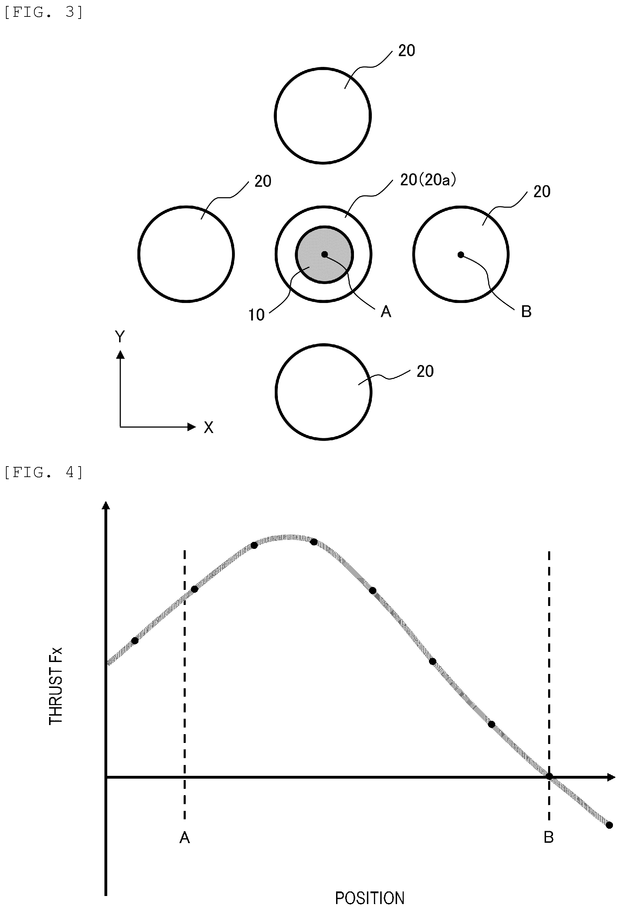

FIG. 3 is a diagram schematically showing a position of the permanent magnet 10 viewed from above (+Z direction). FIG. 3 shows five teeth 20 and the permanent magnet 10 of the conveyed object. It is assumed that a current position of the permanent magnet 10 is a position A and the permanent magnet 10 moves from the position A toward a position B. The tooth 20 at the position A is the lower tooth 20a.

To place the conveyed object on the conveyance surface 15, for example, there is a method of placing the conveyed object with a feeder or a robot hand, a method of placing the conveyed object by human work, or the like. When the conveyed object is placed on the conveyance surface 15, a center position of the permanent magnet 10 of the conveyed object is preferably aligned with a center position of the tooth 20.

However, when the conveyed object is placed on the conveyance surface 15, the center position of the permanent magnet 10 often deviates from the center position of the tooth 20. It is preferable to correct such a positional deviation of the conveyed object. However, particularly when the number of conveyed objects is large, it is difficult to adjust a position of each conveyed object while measuring a position of a placed conveyed object, and thus it is difficult to correct the positional deviation of the conveyed object.

When the center position of the permanent magnet 10 of the conveyed object is deviated from the center position of the tooth 20 at the time of starting the conveyance of the conveyed object, a difference from originally required thrust is generated in thrust during the conveyance according to an amount of the deviation.

When the conveyed object is conveyed, the movement of the conveyed object is temporarily stopped at a position where a traveling path of the conveyed object is curved or at a position where a reagent is dropped or dispensed onto the conveyed object. During the stop, it is preferable that the center position of the permanent magnet 10 of the conveyed object is aligned with the center position of the tooth 20.

However, when the movement of the conveyed object is stopped, the center position of the permanent magnet 10 often deviates from the center position of the tooth 20 at a stop position. When such a positional deviation of the conveyed object occurs, a difference from the originally required thrust is generated in thrust at the time of starting the movement of the conveyed object again according to an amount of the deviation.

As described above, when a difference occurs in the thrust at the time of conveying the conveyed object due to a positional deviation of the conveyed object (deviation of an initial position of the movement from an assumed position), the deviation of a stop position of the conveyed object from a target position, or overshooting or undershooting from the target position occurs, and when the conveyed object contains a liquid sample, the sample may shake due to a speed variation of the conveyed object, foaming or liquid leakage may occur, and analysis of the sample may be adversely affected.

FIG. 4 is a diagram showing an example of a relationship between the position of the permanent magnet 10 of the conveyed object and thrust Fx acting on the conveyed object when a constant current flows through the coil 30 at the position B. When a current flows through the coil 30 at the position B, a magnetic pole that attracts the permanent magnet 10 is generated in the tooth 20 at the position B.

When the conveyed object (permanent magnet 10) is at the position A, the permanent magnet 10 moves from the position A to the position B along the X direction by using an X-direction component of the attraction force generated in the tooth 20 as the thrust Fx. The thrust Fx acting on the permanent magnet 10 changes depending on a distance from the position A. When the permanent magnet 10 approaches the position B from the position A, a distance between the permanent magnet 10 and the position B decreases, and thus the thrust Fx increases. However, when the permanent magnet 10 further approaches the position B, a Z-direction component of the attraction force generated by the tooth 20 at the position B increases, and the X-direction component, that is, the thrust Fx decreases. For example, at the position B, the attraction force generated by the tooth 20 at the position B is only the Z-direction component, and the thrust Fx which is the X-direction component is zero.

As can be seen from FIG. 4, the thrust Fx generated in the conveyed object (permanent magnet 10) changes depending on a distance (deviation amount) from the position A. Therefore, when the permanent magnet 10 of the conveyed object moves to the position B from a position deviated from the position A as an initial position, the thrust Fx acting on the permanent magnet 10 is different from originally required thrust (thrust when moving to the position B from the position A as the initial position). As described above, due to the positional deviation (deviation of the initial position) of the permanent magnet 10, a deviation also occurs in the thrust Fx acting on the permanent magnet 10.

For example, when the permanent magnet 10 moves from a position closer to the position B than the position A, the thrust Fx becomes larger than that in the case where the permanent magnet 10 is at the position A, and the conveyed object overshoots or stops at a position beyond a target position. When the permanent magnet 10 moves from a position farther from the position B than the position A, the thrust Fx becomes smaller than that in the case where the permanent magnet 10 is at the position A, and the conveyed object undershoots or stops at a position before the target position, or an unexpected decrease in speed occurs in the conveyed object.

In the related art, as described above, a deviation occurs in the thrust Fx acting on the permanent magnet 10 due to the positional deviation (deviation of the initial position) of the permanent magnet 10, and it is difficult to stably convey the conveyed object. For example, in the related art, when a plurality of conveyed objects are conveyed, there is a problem that an operation time or a stop position varies among the conveyed objects, and convey stability is low.

In the conveyance device 1 according to the embodiment, when the conveyed object is conveyed, in a state where the conveyed object is stopped, the lower coil 30a is excited to attract the conveyed object to the lower coil 30a (or the lower tooth 20a), and then the propulsion coil 30b is excited to propel the conveyed object. By attracting the conveyed object to the lower coil 30a, the initial position of the conveyed object when the conveyed object is conveyed can be set to a specific position (for example, the position A).

For example, in the conveyance device 1 according to the embodiment, the lower coil 30a (that is, the coil 30 closest to the conveyed object among the plurality of coils 30) is excited at at least one timing of timings such as when the conveyed object is placed on the conveyance surface 15, after the movement of the conveyed object is temporarily stopped, and when the conveyance of the stopped conveyed object is started, and an attraction force is generated in the lower coil 30a (or the lower tooth 20a). Then, by this attraction force, the center position of the permanent magnet 10 of the conveyed object is aligned with the center position of the excited lower coil 30a (the center position of the lower tooth 20a).

That is, in the conveyance device 1 according to the embodiment, when the conveyed object is stopped or when the conveyance of the conveyed object is started, a current is supplied to the lower coil 30a to excite the lower coil 30a, so that the position of the permanent magnet 10 of the conveyed object (the initial position of the movement of the conveyed object) is aligned with the position of the lower coil 30a (or the lower tooth 20a).

Alignment of the positions includes a case where the positions may not strictly be aligned and the positions can be regarded as being aligned with each other. The case where the positions can be regarded as being aligned with each other is, for example, a case where a difference between the center position of the permanent magnet 10 of the conveyed object and the center position of the coil 30 (the center position of the tooth 20) is within a predetermined allowable range.

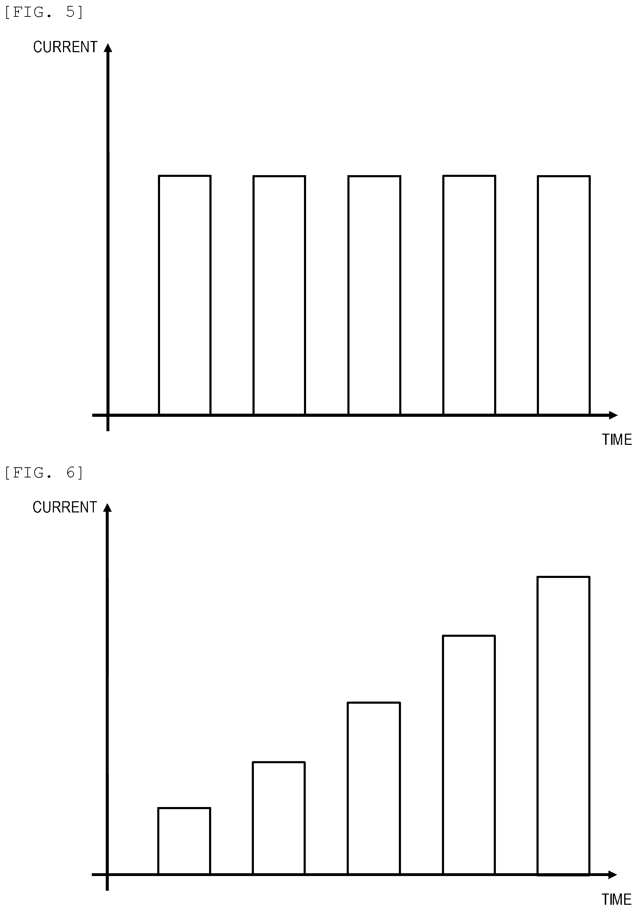

FIG. 5 is a diagram showing an example of a pattern of a current supplied to the lower coil 30a. A current pattern shown in FIG. 5 is, for example, a current pattern when the permanent magnet 10 of the conveyed object is in the vicinity of the position A and the lower coil 30a at the position A is excited to align the center position of the permanent magnet 10 with the center position of the lower coil 30a (lower tooth 20a) at the position A. FIG. 5 shows, as an example, a pattern when a pulsed current is intermittently supplied to the lower coil 30a.

When the lower coil 30a (the coil 30 at the position A) is excited such that the permanent magnet 10 is attracted to the lower coil 30a, a force is generated to align the center position of the permanent magnet 10 with the center position of the lower coil 30a (the lower tooth 20a). By this force, the center position of the permanent magnet 10 of the conveyed object can be brought close to the center position of the lower coil 30a, preferably the positions of the centers can be aligned, and the thrust when the conveyed object moves can be stabilized.

As shown in FIG. 5, it is preferable to intermittently supply a current to the lower coil 30a (the coil 30 at the position A in the embodiment) to intermittently excite the lower coil 30a. When the lower coil 30a is intermittently excited, a force acting on the conveyed object becomes vibrational, and the conveyed object can be easily moved by this vibration.

Although FIG. 5 shows an example in which a pulsed current is supplied to the lower coil 30a, the lower coil 30a is not limited to being supplied with a pulsed current, and can be supplied with a current having any waveform such as a sinusoidal current or a rectangular current.

In addition, it is preferable that a frequency of the supplied current when the current is intermittently supplied to the lower coil 30a is a natural vibration frequency of the conveyed object or a frequency near the natural vibration frequency of the conveyed object. When the current is supplied to the coil 30 at such a frequency, the conveyed object is resonated, the conveyed object can be moved with a small current (that is, small thrust), a position of the conveyed object can be effectively adjusted, and the conveyed object can be conveyed more stably. The frequency near the natural vibration frequency of the conveyed object is a frequency that can be regarded as the natural vibration frequency of the conveyed object, and is, for example, a frequency whose difference from the natural vibration frequency is within a predetermined allowable range.

In the embodiment, as described above, when the conveyed object is stopped or when the conveyance of the conveyed object is started, the lower coil 30a is excited by supplying a current to the coil 30 (lower coil 30a) that is located below the conveyed object and is closest to the conveyed object, and the position of the permanent magnet 10 of the conveyed object is aligned with the position of the lower coil 30a (or the lower tooth 20a), so that an initial position of the conveyed object when the conveyed object is conveyed can be set to a predetermined position, and the thrust for moving the conveyed object can be stabilized. Therefore, the conveyed object can be stably conveyed and the conveyed object can be stopped with high positional accuracy in the embodiment.

### [Embodiment 2]

The conveyance device 1 according to Embodiment 2 of the invention will be described. The conveyance device 1 according to the embodiment has a configuration similar to that of the conveyance device 1 (FIGS. 1 and 2) according to Embodiment 1. Hereinafter, a difference between the conveyance device 1 according to the embodiment and the conveyance device 1 according to Embodiment 1 will be mainly described.

As shown in FIG. 4, when a current is supplied to the coil 30 at the position B, the thrust Fx acting on the conveyed object changes depending on the position of the conveyed object (permanent magnet 10).

Here, it is assumed that the permanent magnet 10 is located in the vicinity of the position B, and a case where a current is supplied to the lower coil 30a (the coil 30 at the position B) that is located below the permanent magnet 10 and is closest to the permanent magnet 10, the lower coil 30a is excited to generate the thrust Fx, and the position of the permanent magnet 10 is aligned with the position of the lower coil 30a at the position B is considered.

As can be seen from FIG. 4, the thrust Fx generated in the permanent magnet 10 increases as the position of the permanent magnet 10 is farther from the position B (that is, as the deviation of the position of the permanent magnet 10 from the position B increases). Therefore, in a case where the position of the permanent magnet 10 (conveyed object) is away from the position B, when the lower coil 30a (the coil 30 at the position B) is excited, a large force suddenly acts on the permanent magnet 10, and a large acceleration force suddenly occurs in the conveyed object. When the conveyed object of a liquid sample is conveyed, a large acceleration force may cause liquid shaking of the sample, foaming or scattering of the liquid, liquid leakage, or the like.

Therefore, the magnitude of the current supplied to the lower coil 30a is first reduced and gradually increased over time in the embodiment. In this manner, a force acting on the permanent magnet 10 can be reduced first and gradually increased over time, and a large acceleration force can be prevented from being generated in the conveyed object.

FIG. 6 is a diagram showing an example of a pattern of a current supplied to the lower coil 30a in the embodiment. As shown in FIG. 6, a current whose magnitude is increased over time is intermittently supplied to the lower coil 30a.

When the permanent magnet 10 of the conveyed object is positioned very close to the lower coil 30a (the coil 30 whose center is to be aligned with the permanent magnet 10), since an initial value of the current is small, the generated thrust Fx is also small at first. When the magnitude of the current increases over time, the thrust Fx gradually increases. When the thrust Fx exceeds a static frictional force of the conveyed object, the conveyed object starts to move, and the center position of the conveyed object (permanent magnet 10) can be aligned with the center position of the lower coil 30a.

When the permanent magnet 10 of the conveyed object is located at a position far from the lower coil 30a, even if the initial value of the current is small, since the position of the permanent magnet 10 is away from the lower coil 30a (in FIG. 4, since the position of the permanent magnet 10 is away from the position B), the thrust Fx acting on the permanent magnet 10 is large. Therefore, the conveyed object can be moved by the thrust Fx, and the center position of the conveyed object (permanent magnet 10) can be aligned with the center position of the lower coil 30a.

Although FIG. 6 shows an example in which a pulsed current whose magnitude increases over time is supplied, the supplied current is not limited to a pulsed current and may have any waveform such as a sinusoidal waveform or a rectangular waveform.

In the above description, an example in which the magnitude of the current intermittently supplied to the lower coil 30a is gradually increased over time has been described. The current intermittently supplied to the lower coil 30a may be gradually increased as an energization time is increased over time. When the energization time of the current intermittently supplied to the lower coil 30a is increased, the force acting on the permanent magnet 10 can be reduced at first and gradually increased over time, which is similar to the case where the magnitude of the current is increased.

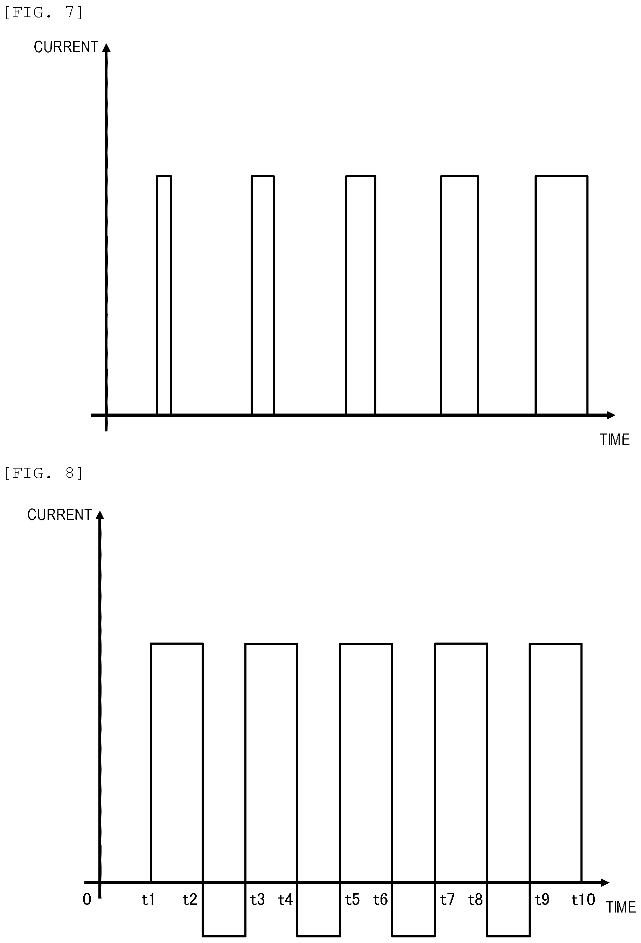

FIG. 7 is a diagram showing an example of a pattern of a current intermittently supplied to the lower coil 30a, and is a diagram showing an example of a pattern of a current for which the energization time is gradually increased over time.

The current intermittently supplied to the lower coil 30a may be gradually increased as both the magnitude and the energization time are increased over time. That is, the current intermittently supplied to the lower coil 30a may be gradually increased as at least one of the magnitude and the energization time is increased over time.

At least one of the magnitude and the energization time of the current intermittently supplied to the lower coil 30a may be reduced over time or may be freely changed. By applying any change (for example, a monotonic increase, a monotonic decrease, or a combination of an increase and a decrease) to at least one of the magnitude and the energization time of the current, it is possible to prevent a large acceleration force from being generated in the conveyed object, and it is possible to easily move the conveyed object by applying a vibration force to the conveyed object.

### [Embodiment 3]

The conveyance device 1 according to Embodiment 3 of the invention will be described. The conveyance device 1 according to the embodiment has a configuration similar to that of the conveyance device 1 (FIGS. 1 and 2) according to Embodiment 1. Hereinafter, a difference between the conveyance device 1 according to the embodiment and the conveyance device 1 according to Embodiment 1 will be mainly described.

When a current is supplied to the coil 30 and a magnetic attraction force is generated in the tooth 20, the permanent magnet 10 of the conveyed object is attracted and moved by the tooth 20. At this time, a frictional force is generated in the conveyed object, and there is a range in which the conveyed object cannot be easily moved with the small thrust Fx due to the frictional force, particularly in the vicinity immediately above the tooth 20.

Therefore, in the embodiment, a direction of the current supplied to the coil 30 (lower coil 30a) that is located below the conveyed object (permanent magnet 10) and is closest to the conveyed object is changed over time, and an attraction force and a repulsion force to the conveyed object are alternately generated in the tooth 20 (or the lower coil 30a) to move the conveyed object. By alternately generating the attraction force and the repulsion force to the conveyed object, the thrust Fx acting on the conveyed object becomes vibrational, and an influence of the frictional force can be reduced by this vibration, and the conveyed object can be easily moved. Further, by moving the conveyed object away from the coil 30 by the repulsion force to the conveyed object, the thrust Fx acting on the conveyed object can be increased (see FIG. 4), and the movement of the conveyed object can be facilitated.

FIG. 8 is a diagram showing an example of a pattern of a current supplied to the lower coil 30a in the embodiment. As shown in FIG. 8, a current whose flowing direction is alternately changed over time is intermittently supplied to the lower coil 30a. Accordingly, an attraction force and a repulsion force to the permanent magnet 10 of the conveyed object is alternatively generated in the lower coil 30a. FIG. 8 shows an example in which a positive current is a current that generates an attraction force, and a negative current is a current that generates a repulsion force.

For example, at a time t1, a positive current is supplied to the lower coil 30a to generate an attraction force in the lower tooth 20a (lower coil 30a), and at a next time t2, a negative current is supplied to the lower coil 30a to generate a repulsion force in the lower tooth 20a. Then, at a next time t3, a positive current is supplied to the lower coil 30a, and at a next time t4, a negative current is supplied to the lower coil 30a, thereby alternately generating an attraction force and a repulsion force in the lower tooth 20a.

The repulsion force generated in the lower tooth 20a has not only an X-direction component (repulsion force in the X direction) but also a Z-direction component (repulsion force in the Z direction). Since the repulsion force in the Z direction is a force for moving the conveyed object in an undesired direction, it is preferable to reduce this repulsion force. Therefore, in the current supplied to the coil 30, at least one of the magnitude and the energization time of the current for generating the repulsion force is preferably smaller than that of the current for generating the attraction force. In this manner, the movement of the conveyed object can be gently changed, and the conveyed object can be stably conveyed.

FIG. 8 shows an example in which the magnitude of the current for generating the repulsion force (negative current) is smaller than the magnitude of the current for generating the attraction force (positive current).

In the embodiment, by changing the direction of the current supplied to the lower coil 30a over time and causing the lower coil 30a (or the lower tooth 20a) to alternately generate the attraction force and the repulsion force to the conveyed object, the influence of the frictional force generated in the conveyed object can be reduced, and the position of the permanent magnet 10 of the conveyed object and the position of the lower coil 30a (or the lower tooth 20a) can be easily aligned with each other.

### [Embodiment 4]

The conveyance device 1 according to Embodiment 4 of the invention will be described. The conveyance device 1 according to the embodiment has a configuration similar to that of the conveyance device 1 (FIGS. 1 and 2) according to Embodiment 1. Hereinafter, a difference between the conveyance device 1 according to the embodiment and the conveyance device 1 according to Embodiment 1 will be mainly described.

In the conveyance device 1 according to the embodiment, as described in Embodiments 1 to 3, a current is intermittently supplied to the lower coil 30a (the coil 30 at the position A in the examples shown in FIGS. 2 and 3), and an attraction force is generated in the lower coil 30a (or the lower tooth 20a). Then, a current for generating an attraction force is alternately supplied to the lower coil 30a and the propulsion coil 30b (the coil 30 that is located in front of the conveyed object in the traveling direction and generates thrust toward the permanent magnet 10, the coil 30 located at the position B in the examples shown in FIGS. 2 and 3).

For example, during a current is intermittently supplied to the lower coil 30a (the coil 30 at the position A), a current is supplied to the propulsion coil 30b (the coil 30 at the position B) in a time zone in which no current is supplied to the lower coil 30a. Similar to the lower coil 30a, the propulsion coil 30b is supplied with a current for generating an attraction force in the lower coil 30a (or the lower tooth 20a).

In the embodiment, a current for generating an attraction force is alternately supplied to the lower coil 30a and the propulsion coil 30b to alternately cause the lower coil 30a to generate the attraction force and cause the propulsion coil 30b to generate the attraction force. For example, while a current is intermittently supplied to the lower coil 30a, a current for generating an attraction force is supplied to the propulsion coil 30b in a time zone in which no current is supplied to the lower coil 30a. By causing the current to flow in this manner, the position of the permanent magnet 10 of the conveyed object can be effectively aligned with the position of the lower coil 30a, that is, the position of the lower tooth 20a.

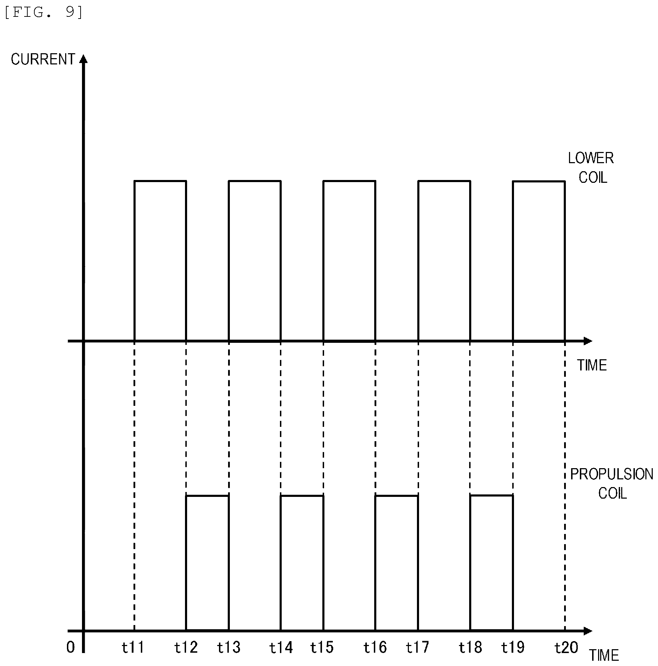

FIG. 9 is a diagram showing an example of patterns of currents supplied to the lower coil 30a and the propulsion coil 30b. An upper part of FIG. 9 shows a pattern of a current supplied to the lower coil 30a, and a lower part of FIG. 9 shows a pattern of a current supplied to the propulsion coil 30b.

At a time t11 which is the start of an operation, a current is supplied to the lower coil 30a (the coil 30 at the position A) to generate an attraction force, and the conveyed object is attracted toward the lower coil 30a (that is, toward the position A).

At a time t12, the current supplied to the lower coil 30a is set to zero, and a current is supplied to the propulsion coil 30b to generate an attraction force. The conveyed object is attracted toward the propulsion coil 30b (that is, toward the position B) by this attraction force.

At a time t13, the current supplied to the propulsion coil 30b is set to zero, a current is supplied to the lower coil 30a to generate an attraction force, and the conveyed object is attracted toward the lower coil 30a (that is, toward the position A).

The attraction force generated by the current supplied to the lower coil 30a (position A) has a large attraction effect on the conveyed object because the conveyed object (permanent magnet 10) is located at a position close to the lower coil 30a. On the other hand, the attraction force generated by the current supplied to the propulsion coil 30b (position B) has a small attraction effect on the conveyed object because the conveyed object is located at a position far from the propulsion coil 30b. Since the magnitude of the attraction force by the lower coil 30a and the magnitude of the attraction force by the propulsion coil 30b have such a relationship, the conveyed object can be moved toward the lower coil 30a (toward the lower tooth 20a, that is, toward the position A).

The magnitude of the current supplied to the lower coil 30a (position A) is preferably larger than the magnitude of the current supplied to the propulsion coil 30b (position B). In this manner, the attraction force of the lower coil 30a can be made larger than the attraction force of the propulsion coil 30b, and the conveyed object can be effectively moved toward the lower coil 30a (that is, toward the position A).

In the embodiment, a current is alternately supplied to the lower coil 30a and the propulsion coil 30b so as to generate an attraction force, and a vibration force acts on the conveyed object (permanent magnet 10), so that the conveyed object can be easily moved, and the position of the conveyed object can be effectively aligned with the position of the lower coil 30a (or the lower tooth 20a). Therefore, an initial position of the conveyed object when the conveyed object is conveyed can be set to a predetermined position, the thrust for moving the conveyed object can be stabilized, and the conveyed object can be stably conveyed.

In the above description, as shown in FIG. 9, while a current is intermittently supplied to the lower coil 30a, a current is supplied to the propulsion coil 30b in a time zone in which no current is supplied to the lower coil 30a. That is, a current supplied to the lower coil 30a is set to zero after a current is supplied to the lower coil 30a, and then a current is supplied to the propulsion coil 30b. When the supply of a current is rapidly switched in this manner, a direction of an attraction force with respect to the conveyed object rapidly changes (for example, a change from attraction to the position A to attraction to the position B in an opposite direction rapidly occurs), and the conveyed object may be greatly fluctuated and adversely affected.

Therefore, when a current supplied to the lower coil 30a is set to zero after the current is supplied to the lower coil 30a, a current may be supplied to the propulsion coil 30b before the current supplied to the lower coil 30a becomes zero. Alternatively, when a current supplied to the propulsion coil 30b is set to zero after the current is supplied to the propulsion coil 30b, a current may be supplied to the lower coil 30a before the current supplied to the propulsion coil 30b becomes zero. Alternatively, these two current supply methods may be used in combination.

That is, when the supply of a current to the lower coil 30a and the supply of a current to the propulsion coil 30b are switched, a part of a time zone in which a current is supplied to the lower coil 30a and a part of a time zone in which a current is supplied to the propulsion coil 30b may overlap each other.

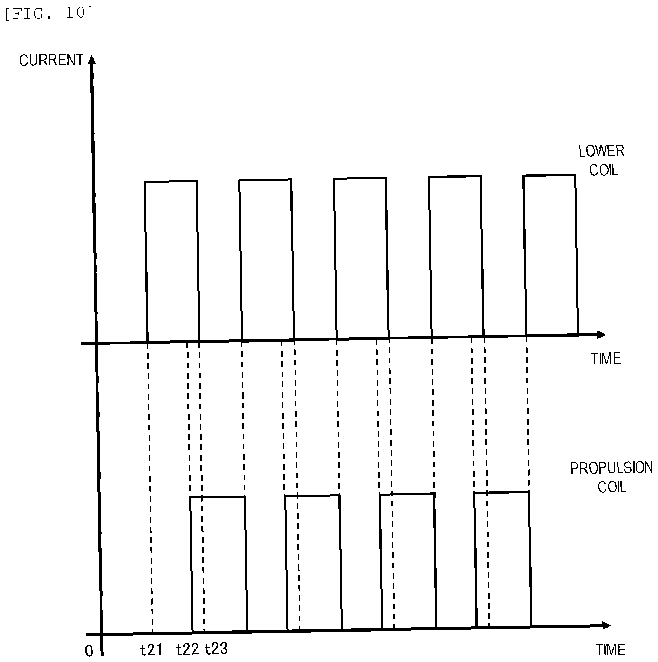

FIG. 10 is a diagram showing an example of a pattern of a current supplied to the propulsion coil 30b before a current supplied to the lower coil 30a becomes zero.

At a time t21, a current is supplied to the lower coil 30a, and at a time t23, the current supplied to the lower coil 30a is set to zero. At a time t22 before the time t23, a current is supplied to the propulsion coil 30b. That is, after the current is supplied to the propulsion coil 30b at the time t22, the current supplied to the lower coil 30a is set to zero at the time t23. A time zone in which a current is supplied to the lower coil 30a overlaps a time zone in which a current is supplied to the propulsion coil 30b between the time t22 and the time t23.

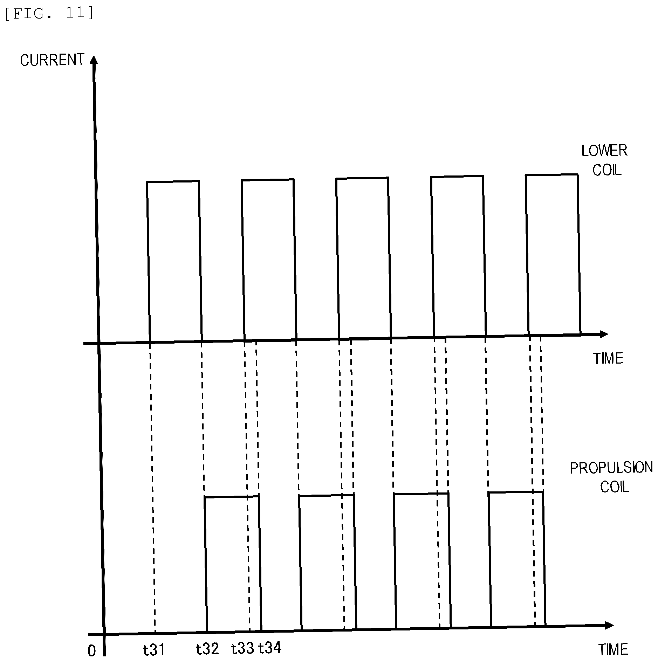

FIG. 11 is a diagram showing an example of a pattern of a current supplied to the lower coil 30a before a current supplied to the propulsion coil 30b becomes zero.

At a time t31, a current is supplied to the lower coil 30a, and at a time t32, the current supplied to the lower coil 30a is set to zero and a current is supplied to the propulsion coil 30b. At a time t34, the current supplied to the propulsion coil 30b is set to zero. At a time t33 before the time t34, a current is supplied to the lower coil 30a. That is, after the current is supplied to the lower coil 30a at the time t33, the current supplied to the propulsion coil 30b is set to zero at the time t34. A time zone in which a current is supplied to the propulsion coil 30b overlaps a time zone in which a current is supplied to the lower coil 30a between the time t33 and the time t34.

As described above, when the supply of a current to the lower coil 30a and the supply of a current to the propulsion coil 30b are switched, a part of a time zone in which a current is supplied to the lower coil 30a and a part of a time zone in which a current is supplied to the propulsion coil 30b overlap with each other, so that it is possible to prevent a direction of an attraction force acting on the conveyed object from changing greatly, and it is possible to prevent the occurrence of a large fluctuation in the conveyed object.

When a current supplied to a coil is set to zero, the current may be gradually reduced, or when a current is supplied to a coil, the current may be gradually increased, so that a change in the direction of the attraction force acting on the conveyed object becomes gentle. In this manner, it is possible to more effectively prevent the occurrence of a large fluctuation in the conveyed object.

### [Embodiment 5]

The conveyance device 1 according to Embodiment 5 of the invention will be described. The conveyance device 1 according to the embodiment has a configuration similar to that of the conveyance device 1 (FIGS. 1 and 2) according to Embodiment 1. Hereinafter, a difference between the conveyance device 1 according to the embodiment and the conveyance device 1 according to Embodiment 1 will be mainly described.

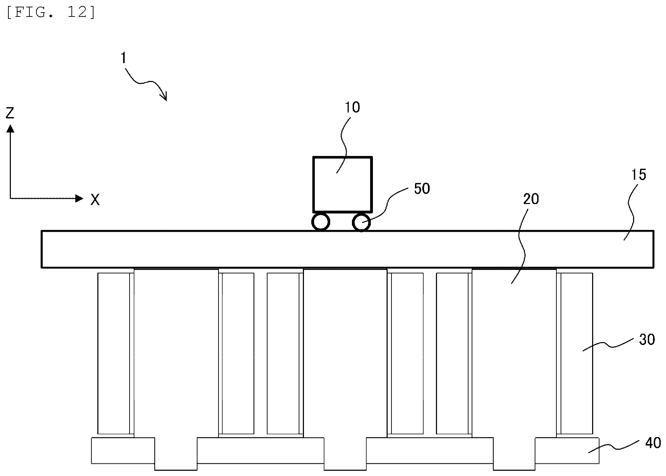

FIG. 12 is a diagram schematically showing the conveyance device 1 according to the embodiment cut along the ZX plane similarly to FIG. 2. The conveyance device 1 according to the embodiment includes a rolling portion 50 between the conveyed object (permanent magnet 10) and the conveyance surface 15 on which the conveyed object moves. More specifically, the conveyed object includes the rolling portion 50 on a lower surface of the conveyed object.

The rolling portion 50 is a member that reduces friction between the conveyed object and the conveyance surface 15 when the conveyed object moves. The rolling portion 50 can be formed of any member such as a rod-shaped member and a ball bearing.

There is friction between the conveyed object and the conveyance surface 15, and the friction force prevents the conveyed object from moving smoothly on the conveyance surface 15, which leads to unstable movement. Therefore, when the friction is large, it is necessary to increase the current for exciting the lower coil 30a (the coil 30 at the position A in the example shown in FIGS. 2 and 3) and obtain such a large force that the conveyed object overcomes the frictional force and can move to the center position of the lower coil 30a (or the lower tooth 20a).

The conveyance device 1 according to the embodiment includes the rolling portion 50, and when the conveyed object moves, the friction between the conveyed object and the conveyance surface 15 can be reduced, the conveyed object can be moved more easily, and the thrust for moving the conveyed object can be stabilized. Therefore, the conveyance device 1 according to the embodiment can stably convey the conveyed object.

### [Embodiment 6]

A sample analysis system and a sample preprocessing device according to an embodiment of the invention will be described. The sample analysis system and the sample preprocessing device according to the embodiment include the conveyance device 1 according to any one of Embodiments 1 to 5 of the invention.

First, the sample analysis system according to the embodiment will be described. The sample analysis system is a device that dispenses a sample and a reagent into a reaction container, causes the sample and the reagent to react with each other, and measures a reacted liquid.

FIG. 13 is a diagram schematically showing an overall configuration of a sample analysis system 100 according to the embodiment. The sample analysis system 100 includes a loading unit 101, an emergency rack input port 113, a conveyance line 102, a buffer 104, an analysis unit 105, a storage unit 103, a display unit 118, and the control unit 120.

The loading unit 101 is a place where a sample rack 111 is disposed, the sample rack 111 being a container carrier for holding a plurality of sample containers 122 each containing a biological sample (sample) such as blood and urine.

The emergency rack input port 113 is a place for inputting, into the device, a sample rack (calib rack) on which a standard solution is mounted and the sample rack 111 that accommodates the sample container 122 containing a sample that needs to be analyzed at emergency.

The conveyance line 102 is a line for conveying the sample rack 111 disposed in the loading unit 101, and can be implemented by the conveyance device 1 according to any one of Embodiments 1 to 5 of the invention. In the embodiment, the conveyed object is the sample rack 111, and the permanent magnet 10 included in the conveyed object is provided on a bottom surface of the sample rack 111. The conveyance device 1 conveys the conveyed object from the loading unit 101 to the analysis unit 105. The sample rack 111 which is a conveyed object is conveyed in at least a part of the conveyance line 102 to the analysis unit 105.

The buffer 104 holds the plurality of sample racks 111 conveyed by the conveyance line 102 so that a dispensing order of samples in the sample racks 111 can be changed.

The analysis unit 105 analyzes the sample conveyed from the loading unit 101 to the sample rack 111 through the buffer 104 by the conveyance line 102. The analysis unit 105 analyzes components contained in the biological sample (sample) for the biological sample reacted with a reagent. The analysis unit 105 can include, for example, the same configuration as an analysis unit included in an existing sample analysis system.

The storage unit 103 stores the sample rack 111 that accommodates the sample container 122 holding the sample for which the analysis by the analysis unit 105 is completed.

The display unit 118 is a display device for displaying an analysis result in the analysis unit 105. For example, the display unit 118 displays a concentration of a predetermined component contained in the sample as the analysis result.

The control unit 120 is implemented by a computer or the like, controls an operation of each mechanism of the sample analysis system 100, and performs calculation processing of obtaining a concentration of a predetermined component in a sample such as blood or urine. The conveyance device 1 (conveyance line 102) according to an embodiment of the invention is controlled by the control unit 120.

Next, the sample preprocessing device according to the embodiment will be described. The sample preprocessing device is a device that performs various types of preprocessing necessary for analyzing a sample on the sample, and can be connected to the sample analysis system.

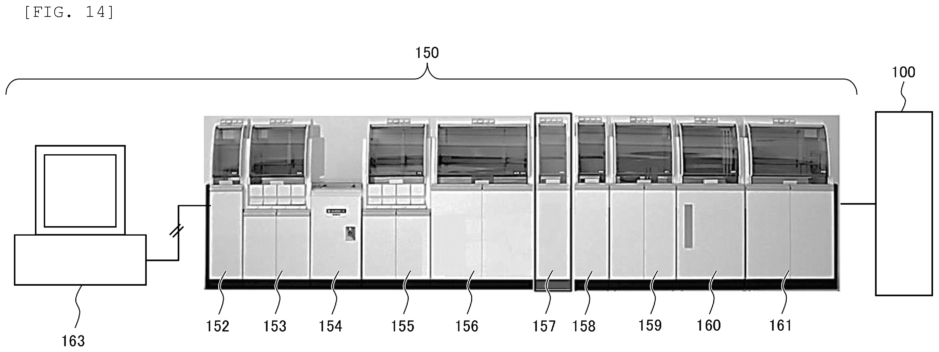

FIG. 14 is a diagram schematically showing an overall configuration of a sample preprocessing device 150 according to the embodiment. The sample preprocessing device 150 can have the same configuration as an existing sample preprocessing device, and includes one or a plurality of preprocessing units that perform preprocessing on a sample conveyed to the sample analysis system. For example, the sample preprocessing device 150 includes, as the preprocessing units, a capping unit 152, a sample storage unit 153, an empty holder stacker 154, a sample input unit 155, a centrifugal separation unit 156, a liquid amount measurement unit 157, an uncapping unit 158, an aliquot sample container preparation unit 159, a dispensing unit 160, and a transfer unit 161, and includes an operation unit 163 that controls operations of the plurality of units.

The sample preprocessing device 150 is connected to the sample analysis system 100 for performing qualitative and quantitative analysis of sample components on the sample as a transfer destination of a preprocessed sample. The sample analysis system 100 analyzes components contained in a biological sample (sample) for the biological sample reacted with a reagent.

The plurality of units included in the sample preprocessing device 150, the sample preprocessing device 150, and the sample analysis system 100 can be connected by the conveyance device 1 according to any one of Embodiments 1 to 5 of the invention. For example, the conveyance device 1 conveys a sample holder that holds the sample container 122 or a container carrier that is the sample rack 111 to the sample analysis system 100 as a conveyed object.

The sample analysis system 100 and the sample preprocessing device 150 according to the embodiment include the conveyance device 1 according to the embodiment of the invention, and can stably convey the sample container 122 to a convey destination, so that a time until an analysis result is obtained can be shortened. In addition, there are few troubles occurring when the sample container 122 is conveyed, and the burden on a laboratory technician can be reduced.

In the embodiment, an example in which the sample rack 111 that holds five sample containers 122 containing samples is the conveyed object has been described as shown in FIG. 13. The conveyed object is not limited to such a sample rack 111, and may be, for example, a sample holder that holds two sample containers 122.

In the Embodiments 1 to 6, the conveyed object conveyed by the conveyance device 1 is not limited to the container carrier such as the sample holder or the sample rack 111, and may be any object such as various objects required to be conveyed in a large scale.

The invention is not limited to the embodiments described above and may include various modifications. For example, the embodiments described above have been described in detail to facilitate understanding of the invention, and the invention is not necessarily limited to those including all configurations described above. A part of a configuration of one embodiment can be replaced with a configuration of another embodiment. A configuration of another embodiment can be added to a configuration of one embodiment. A part of a configuration in each embodiment may be deleted, or may be added with or replaced with another configuration.

### Reference Signs List

1: conveyance device
10: permanent magnet
15: conveyance surface
20: tooth
20a: lower tooth
30: coil
30a: lower coil
30b: propulsion coil
40: bridge
50: rolling portion
100: sample analysis system
101: loading unit
102: conveyance line
103: storage unit
104: buffer
105: analysis unit
111: sample rack
113: emergency rack input port
118: display unit
120: control unit
122: sample container
150: sample preprocessing device
152: capping unit
153: sample storage unit
154: empty holder stacker
155: sample input unit
156: centrifugal separation unit
157: liquid amount measurement unit
158: uncapping unit
159: aliquot sample container preparation unit
160: dispensing unit
161: transfer unit
163: operation unit

## Claims

1. A sample conveyance device comprising:
a plurality of electromagnets each including a tooth made of a magnetic material and a coil wound around the tooth; and
a conveyed object including a permanent magnet and disposed above the electromagnets, wherein
the conveyed object is a container carrier that holds a sample container containing a sample which is a biological sample, and is conveyed in at least a part of a conveyance line to an analysis unit,
the analysis unit analyzes a component contained in the biological sample for the biological sample reacted with a reagent,
the coil includes a lower coil located at a position closest to the conveyed object, and a propulsion coil that is located in front of the conveyed object in a traveling direction and generates thrust toward the conveyed object, and
when the conveyed object is conveyed, the lower coil is excited and then the propulsion coil is excited to propel the conveyed object.

2. The sample conveyance device according to claim 1, wherein
when the conveyed object is conveyed, the lower coil is excited to attract the conveyed object to the lower coil, and then the propulsion coil is excited to propel the conveyed object.

3. The sample conveyance device according to claim 1, wherein
the lower coil is excited in a state where the conveyed object is stopped.

4. The sample conveyance device according to claim 1, wherein
the lower coil is excited when conveyance of the conveyed object is started.

5. The sample conveyance device according to claim 1, wherein
a current is intermittently supplied to the lower coil to intermittently excite the lower coil.

6. The sample conveyance device according to claim 5, wherein
at least one of a magnitude and an energization time of the current supplied to the lower coil changes over time.

7. The sample conveyance device according to claim 5, wherein
at least one of a magnitude and an energization time of the current supplied to the lower coil increases over time.

8. The sample conveyance device according to claim 5, wherein
a flow direction of the current supplied to the lower coil changes over time, causing the lower coil to alternately generate an attraction force and a repulsion force toward the conveyed object.

9. The sample conveyance device according to claim 8, wherein
a current for generating the repulsion force is smaller in at least one of a magnitude and an energization time than a current for generating the attraction force.

10. The sample conveyance device according to claim 1, wherein
a current is alternately supplied to the lower coil and the propulsion coil to generate an attraction force to the conveyed object, and an attraction force of the lower coil and an attraction force of the propulsion coil are alternately generated.

11. The sample conveyance device according to claim 10, wherein
when supply of the current to the lower coil and supply of the current to the propulsion coil are switched, a time zone in which the current is supplied to the lower coil and a time zone in which the current is supplied to the propulsion coil overlap each other.

12. The sample conveyance device according to claim 5, wherein
a frequency of supply of the current intermittently supplied to the lower coil is a natural vibration frequency of the conveyed object or a frequency near the natural vibration frequency.

13. The sample conveyance device according to claim 1, further comprising:
a conveyance surface on which the conveyed object moves; and
a rolling portion between the conveyed object and the conveyance surface.

14. A sample analysis system comprising:
a loading unit in which a conveyed object is disposed, the conveyed object being a container carrier that holds a sample container containing a sample which is a biological sample;
an analysis unit configured to analyze the conveyed sample; and
a sample conveyance device configured to convey the conveyed object from the loading unit to the analysis unit, wherein
the analysis unit analyzes a component contained in the biological sample for the biological sample reacted with a reagent,
the sample conveyance device includes
a plurality of electromagnets each including a tooth made of a magnetic material and a coil wound around the tooth, and
the conveyed object including a permanent magnet and disposed above the electromagnets,
the coil includes a lower coil located at a position closest to the conveyed object and a propulsion coil that is located in front of the conveyed object in a traveling direction and generates thrust toward the conveyed object, and
when the conveyed object is conveyed, the lower coil is excited and then the propulsion coil is excited to propel the conveyed object.

15. A sample preprocessing device connected to a sample analysis system for analyzing a sample which is a biological sample, the sample preprocessing device comprising:
a preprocessing unit configured to perform preprocessing on the sample conveyed to the sample analysis system; and
a sample conveyance device configured to convey a conveyed object to the sample analysis system, the conveyed object being a container carrier that holds a sample container containing the sample, wherein
the sample analysis system includes an analysis unit that analyzes a component contained in the biological sample for the biological sample reacted with a reagent,
the sample conveyance device includes
a plurality of electromagnets each including a tooth made of a magnetic material and a coil wound around the tooth, and
the conveyed object including a permanent magnet and disposed above the electromagnets,
the coil includes a lower coil located at a position closest to the conveyed object and a propulsion coil that is located in front of the conveyed object in a traveling direction and generates thrust toward the conveyed object, and
when the conveyed object is conveyed, the lower coil is excited and then the propulsion coil is excited to propel the conveyed object.
